# EUROPÄISCHE PATENTSCHRIFT

(11) **EP 2 636 131 B1**
(45) Veröffentlichungstag und Bekanntmachung des Hinweises auf die Patenterteilung: **19.02.2020**
(21) Anmeldenummer: 11776206.2
(22) Anmeldetag: 31.10.2011
(51) Int. Cl.: H02K 9/197, H02K 7/18, F03D 9/00

(54) **WINDENERGIEANLAGE MIT SYNCHRONGENERATOR SOWIE LANGSAM DREHENDER SYNCHRONGENERATOR**
WIND ENERGY INSTALLATION HAVING A SYNCHRONOUS GENERATOR, AND SLOWLY ROTATING SYNCHRONOUS GENERATOR
ÉOLIENNE POURVUE D'UN GÉNÉRATEUR SYNCHRONE, ET GÉNÉRATEUR SYNCHRONE À ROTATION LENTE

(30) Priorität: 10.03.2011 DE 102011005390; 04.11.2010 DE 102010043429
(43) Veröffentlichungstag der Anmeldung: 11.09.2013
(73) Patentinhaber: Wobben Properties GmbH, 26607 Aurich (DE)
(72) Erfinder: HILDEBRAND, Arno, 26409 Wittmund (DE); BAUMGÄRTEL, Christian, 26605 Aurich (DE)
(74) Vertreter: Eisenführ Speiser
(86) Internationale Anmeldenummer: PCT/EP2011/069117
(87) Internationale Veröffentlichungsnummer: WO 2012/059463

(56) Entgegenhaltungen:
- EP-A1- 1 881 194
- EP-A1- 2 182 617
- DE-A1- 19 919 040
- DE-A1-102007 042 338
- US-A1- 2010 264 667

## Beschreibung

Die vorliegende Erfindung betrifft eine Windenergieanlage mit einem Synchrongenerator sowie einen langsam drehenden Synchrongenerator.

Windenergieanlagen mit einem fremderregten Synchrongenerator sind seit Jahren beispielsweise von der Firma Enercon bekannt. Hierbei kann ein Rotor der Windenergieanlage (der sich drehende Teil der Gondel) direkt mit dem Rotor des Synchrongenerators verbunden sein und treibt den Rotor des Generators an, um somit elektrische Energie zu erzeugen.

Hierbei ist es wünschenswert, die Nennleistung der Synchrongeneratoren zu erhöhen, ohne dabei den Durchmesser des Synchrongenerators wesentlich zu erhöhen.

DE 199 19 040 A1 zeigt eine Elektromaschine mit einem Ständer und einem Läufer. Im Ständer und im Läufer sind Ständerkanäle bzw. Läuferkanäle vorgesehen. Ein Kühlmittel durchfließt die Kanäle und nimmt Wärme im Bereich der Läuferkanäle auf und gibt die Wärme im Bereich der Ständerkanäle an den Ständer ab.

EP 1 881 194 A1 zeigt eine Kühlvorrichtung für eine Windenergieanlage.

US 2010/0264667 A1 zeigt eine Windenergieanlage mit einer Luftkühlung der Statorwindungen.

DE 10 2007 042 338 A1 zeigt eine Windenergieanlage mit einem Wärmetauschersystem.

DE 10 2009 050 004 A1 zeigt einen elektrischen Generator mit einem Rotor, einem den Rotor umgebenden Stator und einer wasserbetriebenen Kühleinrichtung mit einem Wassereinlass, einem Wasserauslass sowie Kanälen in dem Rotor und dem Stator zum Durchleiten von Kühlwasser. Die wasserbetriebene Kühleinrichtung ist die einzige Kühleinrichtung des Generators.

DE 600 29 977 T2 zeigt eine Windkraftanlage mit einem Rotor und einem Stator. Eine Kühleinheit dient dazu, Kühlflüssigkeit durch den Stator zu führen, um damit die Wärme von dem Generator abzuführen.

EP 2 182 617 A1 zeigt eine Windenergieanlage mit einem Synchrongenerator und einem Flüssigkeits-Kühlsystem zum Kühlen des Generator-Rotors.

Es ist eine Aufgabe der vorliegenden Erfindung, die Nennleistung eines Generators einer Windenergieanlage zu verbessern.

Diese Aufgabe wird durch eine Windenergieanlage nach Anspruch 1 sowie durch einen Synchrongenerator nach Anspruch 11 gelöst.

Somit wird eine Windenergieanlage mit einem Synchrongenerator vorgesehen, welcher einen Generator-Stator und einen Generator-Rotor aufweist. Die Windenergieanlage weist ferner ein Flüssigkeitskühlsystem zum Kühlen des Generator-Rotors auf. Das Flüssigkeits-Kühlsystem weist mindestens einen Wärmetauscher und mindestens einen Kühlkanal in dem Generator-Rotor auf und dreht sich mit dem Generator-Rotor. Die Kühlflüssigkeit wird durch den mindestens einen Wärmetauscher und den mindestens einen Kühlkanal in dem Generator-Rotor fließen.

Gemäß einem weiteren Aspekt der vorliegenden Erfindung weist das Flüssigkeits-Kühlsystem eine Filtereinheit zum Filtern der Kühlflüssigkeit, eine Pumpeneinheit zum Pumpen der Kühlflüssigkeit durch den Kühlkreislauf und ein Ausdehnungsgefäß auf.

Gemäß einem weiteren Aspekt der vorliegenden Erfindung ist das Flüssigkeits-Kühlsystem in oder an einem (aerodynamischen) Rotor der Windenergieanlage vorgesehen. Damit befindet sich das gesamte Flüssigkeits-Kühlsystem in dem drehenden Teil der Windenergieanlage. Somit kann vermieden werden, dass es zu einem komplizierten Übergang zwischen dem drehenden und stehenden Teil der Windenergieanlage kommen muss.

Gemäß einem weiteren Aspekt der vorliegenden Erfindung weist das Flüssigkeits-Kühlsystem ein Ausgleichsgefäß zur Aufnahme von überflüssiger Kühlflüssigkeit auf, wobei das Ausgleichsgefäß sich in dem (aerodynamischen) Rotor der Windenergieanlage befindet und somit mit dreht.

Der Generator-Rotor weist einen Polschuhträger mit einer Vielzahl von Polschuhen auf, welche am Umfang des Polschuhträgers verteilt vorgesehen sind. Der Polschuhträger weist ferner mindestens einen Kühlkanal auf, durch welchen die Kühlflüssigkeit strömen kann, um somit die Polschuhe indirekt zu kühlen.

Der mindestens eine Kühlkanal ist mit einem Kühlkreislauf gekoppelt, welcher mindestens einen Wärmetauscher an der Außenseite des Rotors der Windenergieanlage bzw.
der Spinnerverkleidung aufweist. Der Wärmetauscher kann ferner in oder an der Verkleidung des Rotors bzw. des Spinners integriert werden.

In dem Kühlkreislauf können ein Ausgleichsgefäß und/oder ein Schmutzfänger vorgesehen sein. Der Kühlkreislauf weist ferner eine Pumpe zum Pumpen der Kühlflüssigkeit durch den Kühlkreislauf auf. Die Kühlflüssigkeit kann beispielsweise Wasser mit einem Anteil von Glykol darstellen.

Der Synchrongenerator gemäß der Erfindung ist vorzugsweise ein fremderregter Synchrongenerator und weist eine Drehzahl von bis zu 50 Umdrehungen pro Minute auf, d. h. es ist ein langsam drehender Synchrongenerator.

Gemäß einem Aspekt der vorliegenden Erfindung ist eine Schmutzfiltereinheit in dem Kühlkreislauf vorgesehen zum Filtern von Partikeln bzw. Schmutz in der Kühlflüssigkeit. Der Filter ist austauschbar ausgestaltet, so dass eine Reinigung des Filters ermöglicht wird.

Gemäß einem weiteren Aspekt der vorliegenden Erfindung wird die Pumpe dauerhaft betrieben bis zu einer vorab festgelegten Betriebsdauer. Nach dieser vorab festgelegten Betriebsdauer kann die Pumpe bei Bedarf betrieben werden. Nach der vorab festgelegten Betriebsdauer kann der Filter gereinigt bzw. ausgetauscht werden, so dass sichergestellt werden kann, dass die Partikel bzw. der Schmutz, der sich in der Kühlflüssigkeit befindet, herausgefiltert worden ist.

Die Erfindung betrifft ebenfalls einen langsam drehenden Synchrongenerator mit einem Generator-Stator, einem Generator-Rotor und einem Flüssigkeits-Kühlsystem zum Kühlen des Generator-Rotors, wobei das Flüssigkeits-Kühlsystem in oder an dem Generator-Rotor vorgesehen ist. Damit wird ein langsam drehender Synchrongenerator vorgesehen, der ein sich mit dem Generator-Rotor drehendes Flüssigkeits-Kühlsystem aufweist. Das Flüssigkeits-Kühlsystem weist einen Wärmetauscher und einen Kühlkanal in dem Generator-Rotor auf, wobei die Kühlflüssigkeit durch den mindestens einen Wärmetauscher und den Kühlkanal in dem Generator-Rotor fließt.

Die Erfindung betrifft den Gedanken, den Rotor und insbesondere die Polschuhe durch ein Flüssigkeitskühlsystem indirekt zu kühlen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Schnittansicht einer Windenergieanlage gemäß einem ersten Ausführungsbeispiel,
- Fig. 2: zeigt eine schematische Darstellung eines Teils eines Kühlsystems einer Windenergieanlage gemäß dem ersten Ausführungsbeispiel,
- Fig. 3: zeigt eine schematische Darstellung eines weiteren Abschnitts eines Kühlsystems einer Windenergieanlage gemäß dem ersten Ausführungsbeispiel,
- Fig. 4: zeigt eine schematische Darstellung einer Gondel einer Windenergieanlage gemäß dem zweiten Ausführungsbeispiel,
- Fig. 5: zeigt eine schematische Darstellung eines Wärmetauschers eines Kühlsystems einer Windenergieanlage gemäß einem dritten Ausführungsbeispiel,
- Fig. 6: zeigt eine schematische Darstellung eines Generator-Rotors einer Windenergieanlage gemäß einem dritten Ausführungsbeispiel,
- Fig. 7: zeigt eine schematische Schnittansicht des Rotors von Fig. 6,
- Fig. 8A: zeigt eine schematische Ansicht einer Gondel einer Windenergieanlage gemäß einem vierten Ausführungsbeispiel,
- Fig. 8B: zeigt eine Draufsicht auf die Gondel von Fig. 8A,
- Fig. 9: zeigt eine Teilschnittansicht der Gondel der Windenergieanlage gemäß dem vierten Ausführungsbeispiel,
- Fig. 10: zeigt eine weitere Teilschnittansicht der Gondel der Windenergieanlage gemäß dem vierten Ausführungsbeispiel,
- Fig. 11: zeigt eine schematische Schnittansicht eines Abschnitts der Gondel der Windenergieanlage gemäß dem vierten Ausführungsbeispiel,
- Fig. 12: zeigt eine schematische Ansicht eines Teils der Gondel der Windenergieanlage gemäß dem vierten Ausführungsbeispiel,
- Fig. 13: zeigt eine perspektivische Ansicht eines Wärmetauschers für eine Gondel gemäß dem vierten Ausführungsbeispiel,
- Fig. 14: zeigt eine schematische Ansicht einer Rückseite des Wärmetauschers von Fig. 13,
- Fig. 15: zeigt eine weitere schematische Ansicht der Rückseite eines Wärmetauschers gemäß einem vierten Ausführungsbeispiel, und
- Fig. 16: zeigt eine weitere perspektivische Ansicht der Rückseite des Wärmetauschers gemäß dem vierten Ausführungsbeispiel.

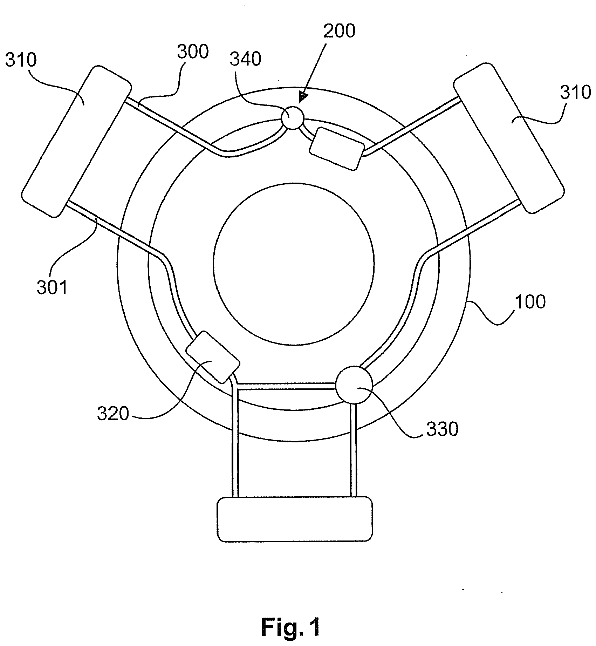

Fig. 1 zeigt eine schematische Darstellung einer Windenergieanlage gemäß einem ersten Ausführungsbeispiel. Die Windenergieanlage weist eine Gondel 100 (mit einem Spinner und einer Spinnerverkleidung bzw. einem aerodynamischen Rotor), einen Generator-Rotor 200 und ein Kühlsystem 300 auf. Der Generator-Rotor 200 ist innerhalb der Gondelverkleidung 100 vorgesehen. Das Kühlsystem 300 ist ein Flüssigkeits-Kühlsystem mit einem Kühlkreislauf, in welchem eine Kühlflüssigkeit fließt. Diese Kühlflüssigkeit kann beispielsweise eine Kombination aus Wasser und Glykol darstellen. Das Kühlsystem 300 weist mindestens einen Wärmetauscher 310 auf, welcher außerhalb der Gondel- oder Spinnerverkleidung 100 vorgesehen sein kann. Alternativ dazu kann der mindestens eine Wärmetauscher 310 in oder an der Gondelverkleidung 100 integriert sein. Das Kühlsystem 300 weist ferner mehrere Kühlrohre 301, eine Pumpeneinheit 320, optional ein Ausdehnungsgefäß 330 sowie optional eine Filtereinheit bzw. Schmutzfängereinheit und mindestens einen Kühlkanal 340 in dem Generator-Rotor 200 auf.

Durch das Kühlsystem gemäß dem ersten Ausführungsbeispiel und den dazugehörigen Kühlkreislauf kann Kühlflüssigkeit durch die Kühlkanäle 340 in den Generator-Rotor 200 fließen und kann somit den Generator-Rotor 200 kühlen. Durch die Wärmetauscher 310 kann die durch den Generator-Rotor erwärmte Kühlflüssigkeit wieder abgekühlt werden. Das Kühlsystem 300 befindet sich in bzw. an dem aerodynamischen Rotor bzw. der Spinnerverkleidung der Windenergieanlage, d. h. das Kühlsystem befindet sich in bzw. an dem drehenden Teil der Windenergieanlage.

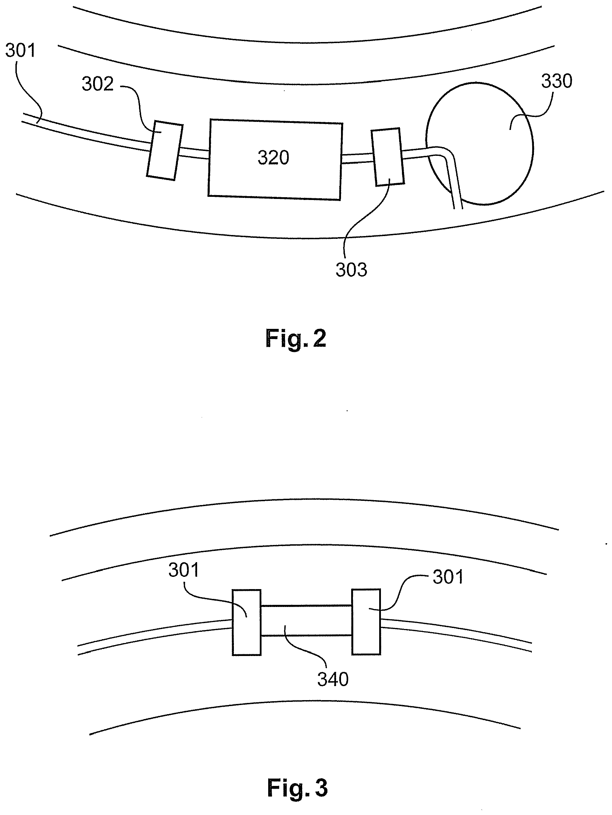

Fig. 2 zeigt einen ersten Ausschnitt des Kühlsystems gemäß dem ersten Ausführungsbeispiel. In Fig. 2 ist dabei die Pumpeneinheit 320, das Ausgleichsgefäß 330, ein Sicherheitsventil gegen Überdruck 302 und optional ein Drucksensor 303 vorgesehen. Die Pumpeneinheit 320 dient dazu, Kühlflüssigkeit durch das Kühlsystem zu pumpen. Das Ausgleichsgefäß 330 dient dabei dazu, überschüssige Kühlflüssigkeit aufzunehmen, damit der Druck innerhalb des Kühlsystems nicht einen vorgegebenen Wert überschreitet.

Fig. 3 zeigt einen zweiten Ausschnitt des Kühlsystems gemäß dem ersten Ausführungsbeispiel. Das Kühlsystem weist Kühlrohre 301 sowie eine Filtereinheit bzw. eine Schmutzfängereinheit 340 auf. Die Schmutzfängereinheit 340 ist austauschbar ausgestaltet. Damit kann die Filtereinheit bei Bedarf ausgetauscht bzw. gereinigt werden.

Gemäß dem ersten Ausführungsbeispiel der Erfindung kann die Pumpeneinheit 320 für eine vorgegebene Anzahl von Betriebsstunden (z. B. 300 h) betrieben werden. Bis zum Erreichen dieser Betriebsstunden wird die Pumpe dauerhaft betrieben. Spätestens nach Erreichen der festgelegten Betriebsdauer wird die Filtereinheit 340 gereinigt bzw. ausgetauscht. Nach Austausch bzw. Reinigung der Filtereinheit wird die Pumpe nur bei Bedarf betrieben. Somit kann erreicht werden, dass in dem ersten Zeitintervall bis zum Erreichen der vorab festgelegten Betriebsdauer die Kühlflüssigkeit von Partikeln und Schmutz gereinigt wird. Da das Kühlsystem ein geschlossenes Kühlsystem darstellt, sollten nach Austausch bzw. Reinigung der Filtereinheit keine weiteren Partikel bzw. kein weiterer Schmutz in der Kühlflüssigkeit vorhanden sein, so dass die Pumpe nur bei Bedarf aktiviert werden kann.

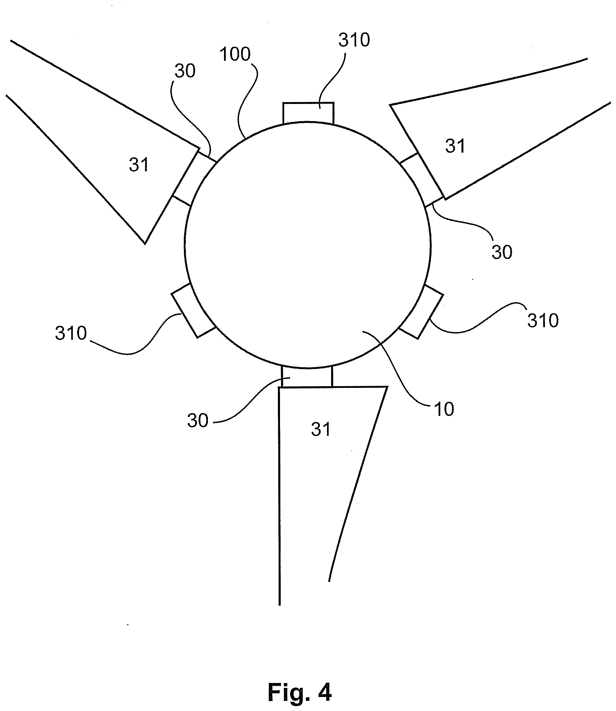

Fig. 4 zeigt eine schematische Darstellung einer Gondel einer Windenergieanlage gemäß einem zweiten Ausführungsbeispiel. Die Gondel weist dabei einen aerodynamischen Rotor (einen sich drehenden Teil) 10 (mit einer Spinnerverkleidung) und einen hinteren - sich nicht drehenden - Teil 20 auf. An dem aerodynamischen Rotor 10 sind Anschlüsse 30 für die Rotorblätter 31 vorhanden. Außen an dem Rotor 10 ist mindestens ein Wärmetauscher 310 vorgesehen. Dieser Wärmetauscher 310 gemäß dem zweiten Ausführungsbeispiel kann dem Wärmetauscher 310 gemäß dem ersten Ausführungsbeispiel entsprechen. Der Wärmetauscher 310 gemäß dem zweiten Ausführungsbeispiel ist Teil eines Flüssigkeits-Kühlsystems zum Kühlen des Generator-Rotors. Hierbei kann das Kühlsystem gemäß dem zweiten Ausführungsbeispiel dem Kühlsystem gemäß dem ersten Ausführungsbeispiel entsprechen.

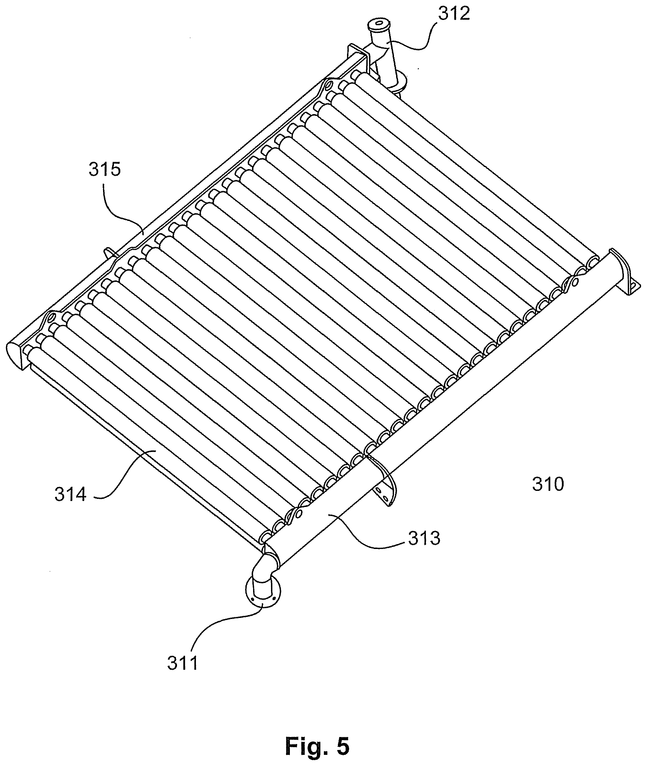

Fig. 5 zeigt eine schematische Darstellung eines Wärmetauschers 310 gemäß einem dritten Ausführungsbeispiel. Hierbei kann der Wärmetauscher 310 gemäß dem dritten Ausführungsbeispiel auch als Wärmetauscher in dem ersten oder zweiten Ausführungsbeispiel verwendet werden.

Der Wärmetauscher 310 weist einen Zufluss bzw. Abfluss 311, einen ersten Rohrabschnitt 313, eine Vielzahl von Kühlrohren 314 sowie einen zweiten Rohrabschnitt 315 auf, welcher mit einem Abfluss bzw. Zufluss 312 verbunden ist. Zwischen dem ersten und zweiten Rohrabschnitt 313, 315 sind eine Vielzahl von Kühlrohren 314 vorgesehen. Die Kühlflüssigkeit fließt dabei durch die Abschnitte 313, 314 sowie durch die Vielzahl der Kühlrohre 314.

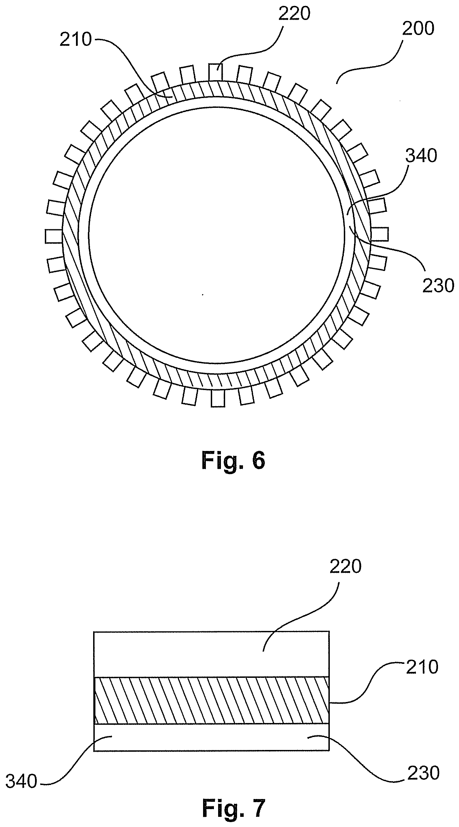

Fig. 6 zeigt einen schematischen Querschnitt eines Synchrongenerator-Rotors einer Windenergieanlage gemäß einem dritten Ausführungsbeispiel. Der Generator-Rotor 200 weist einen Polschuhträger 210 mit einer Vielzahl von Polschuhen 220 sowie mit mindestens einem Kühlkanal 230 auf. In dem Kühlkanal 230 kann die Kühlflüssigkeit des Kühlkreislaufs fließen und kann somit die Polschuhe 220 indirekt kühlen. Dieser Kühlkanal 230 kann den Kühlkanal 340 des Kühlsystems darstellen und kann zum Kühlen des Generator-Rotors vorgesehen werden.

Fig. 7 zeigt eine schematische Schnittansicht des Rotors von Fig. 6. Der Generator-Rotor weist mehrere Polschuhe 220 auf einem Polschuhträger 210 auf. Der Generator-Rotor weist ferner mindestens einen Kühlkanal 230 unterhalb des Polschuhträgers 210 auf. Dieser Kühlkanal kann als ein Kühlkanal oder als eine Mehrzahl von Kühlkanälen ausgestaltet sein.

Die Kühlflüssigkeit gemäß der Erfindung weist vorzugsweise einen Frostschutz auf, damit sichergestellt werden kann, dass die Kühlflüssigkeit nicht gefriert, auch wenn es zu einem Netzausfall kommt und die Windenergieanlage keine elektrische Energie aus dem Netz beziehen kann, um beispielsweise die Pumpe zu betreiben. Durch den Zusatz von Frostschutzmitteln zu der Kühlflüssigkeit wird somit sichergestellt, dass die Kühlflüssigkeit auch im Stillstand der Windenergieanlage nicht gefriert.

Die Drehzahl des Synchrongenerators gemäß der Erfindung liegt im Bereich zwischen 0 und 50 Umdrehungen pro Minute und insbesondere zwischen 0 und 20 Umdrehungen pro Minute.

Durch das Vorsehen des Flüssigkeits-Kühlsystems zum Kühlen des Generator-Rotors und insbesondere der Polschuhe kann der Erregerstrom, welcher in die Rotorwicklung gespeist wird, erhöht werden. Ohne das erfindungsgemäße Flüssigkeits-Kühlsystem und die damit verbundene indirekte Kühlung der Polschuhe würden die Polschuhe bei einem erhöhten Erregerstrom zu warm werden, so dass es zu Beschädigungen der Polschuhe kommen kann. Mit dem erfindungsgemäßen Flüssigkeits-Kühlsystem wird somit sichergestellt, dass aufgrund der indirekten Kühlung die Polschuhe ausreichend gekühlt werden und einen vorab festgesetzten Temperaturschwellwert nicht überschreiten.

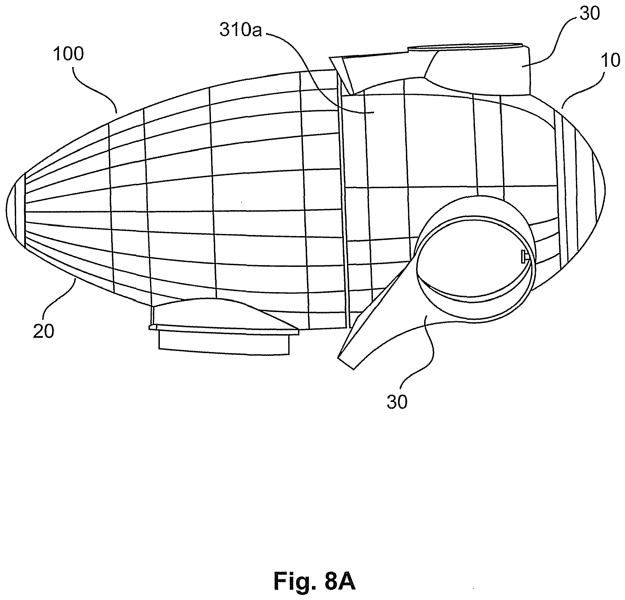

Fig. 8A zeigt eine schematische Ansicht einer Gondel einer Windenergieanlage gemäß einem vierten Ausführungsbeispiel. Die Gondel gemäß dem vierten Ausführungsbeispiel weist einen sich nicht drehenden Teil 20 sowie einen sich drehenden Rotor 10 auf. An dem Rotor 10 sind Anschlüsse 30 für die Rotorblätter vorgesehen. Ferner ist an dem Rotor 10 mindestens ein Wärmetauscher 310a vorgesehen. Der Wärmetauscher 310a ist in die Spinnerverkleidung bzw. die Außenhaut des Rotors 10 integriert. Der Wärmetauscher gemäß dem vierten Ausführungsbeispiel kann zusammen mit dem Kühlsystem gemäß dem ersten, zweiten oder dritten Ausführungsbeispiel verwendet werden.

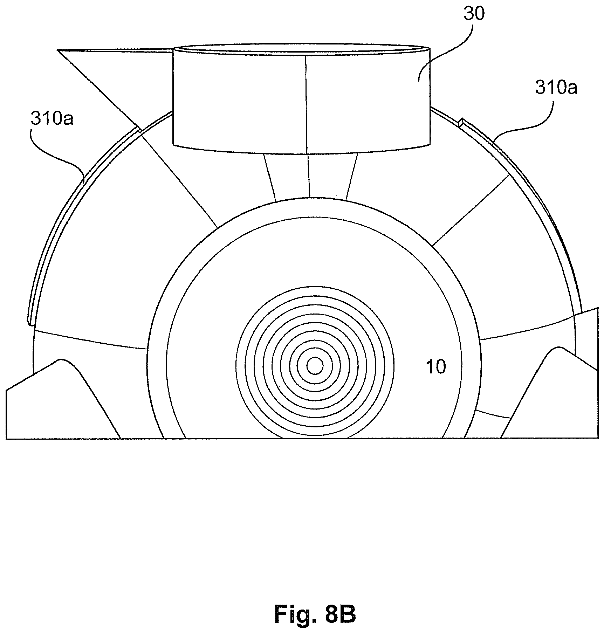

Fig. 8B zeigt eine Draufsicht auf die Gondel von Fig. 8A. Die Wärmetauscher 310a sind an die äußere Gestaltung bzw. Form des Rotors 10 angepasst bzw. sie sind in die Spinnerverkleidung bzw. die Außenhaut des Rotors 10 integriert, d. h. die Wärmetauscher sind gebogen ausgestaltet.

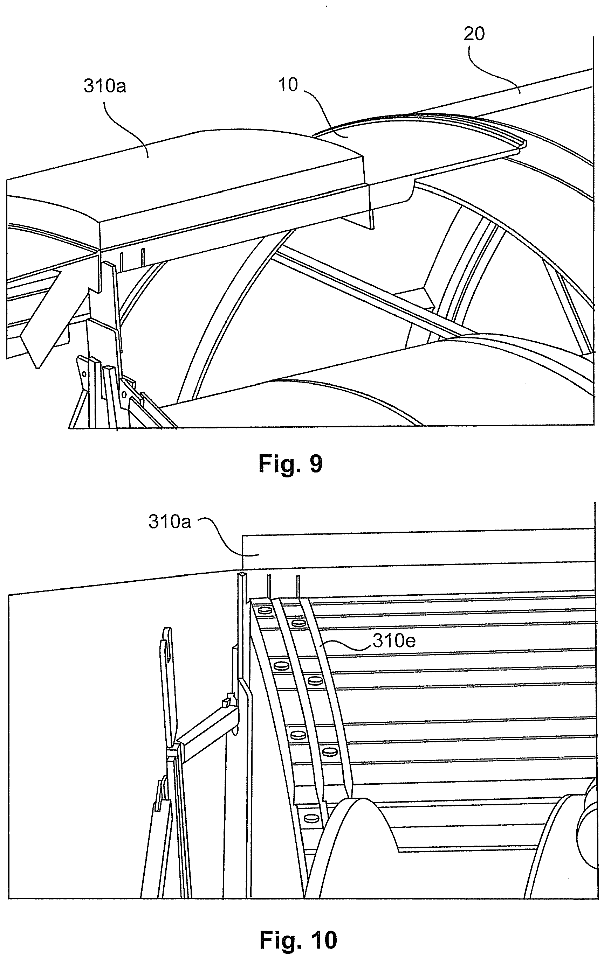

Fig. 9 zeigt eine Teilschnittansicht der Gondel der Windenergieanlage gemäß dem vierten Ausführungsbeispiel. Der Wärmetauscher 310a ist in die Spinnerverkleidung bzw. die Außenhaut des Rotors 10 integriert, d. h. die Wärmetauscher sind gebogen bzw. kreisbogenförmig ausgestaltet.

Fig. 10 zeigt eine weitere Teilschnittansicht der Gondel der Windenergieanlage gemäß dem vierten Ausführungsbeispiel. Auch in Fig. 10 ist zu sehen, dass der Wärmetauscher 310a in oder an die Außenverkleidung des Rotors integriert ist. Hierbei kann optional ein Teil des Wärmetauschers 310a über die Spinnerverkleidung bzw. die Rotoraußenhaut hinausragen. Der Wärmetauscher 310a kann an der Innenseite durch Stützbleche bzw. - stege verstärkt werden. Der Wärmetauscher 310a kann aus einer Mehrzahl von Modulen bestehen, die zusammengesetzt (z. B. geschweißt) werden.

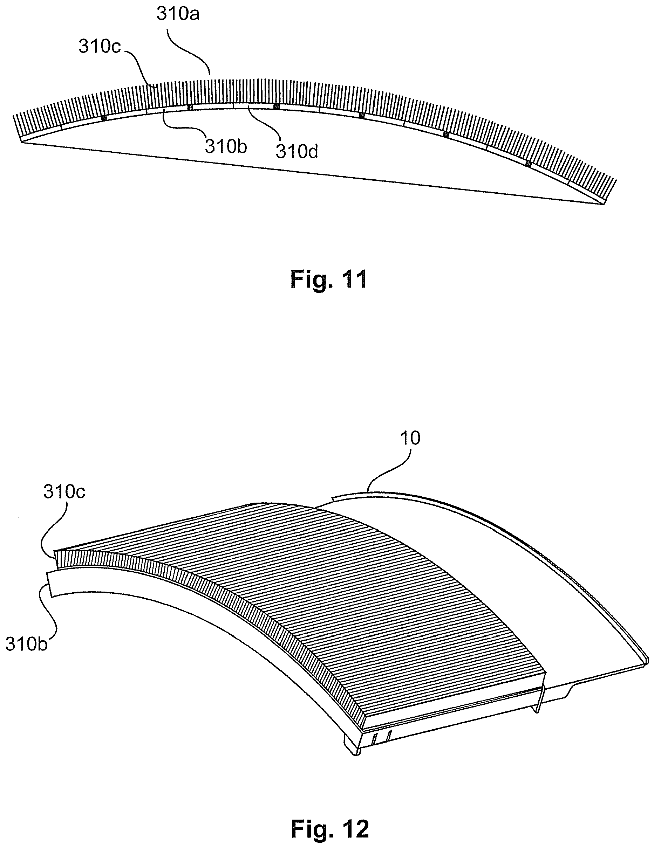

Fig. 11 zeigt eine schematische Darstellung des Wärmetauschers 310a. Der Wärmetauscher 310a weist eine Basiseinheit 310b mit mehreren Kanälen 310d auf. Auf der Basiseinheit 310b sind eine Vielzahl von Kühlrippen 310c vorgesehen. Die Kühlrippen sind dabei in Richtung der Drehachse des Rotors ausgerichtet. Alternativ dazu können sie auch in einem Winkel von z. B. 30° zur Drehachse ausgerichtet sein.

Fig. 12 zeigt eine perspektivische Ansicht des Wärmetauschers gemäß dem vierten Ausführungsbeispiel, Der Wärmetauscher 310a weist eine Vielzahl von parallel angeordneten Kühlrippen 310c auf. Diese Kühlrippen 310c können über die Außenhaut des Rotors 10 hinausragen. Bei Betrieb der Windenergieanlage wird der Wind an den Kühlrippen 310c entlang streichen und wird zur Kühlung dieser Kühlrippen 310c beitragen. Der Wärmetauscher 310a ist gemäß dem vierten Ausführungsbeispiel kreisbogenförmig ausgestaltet, damit er an die Außenhaut des Rotors angepasst ist. Der Wärmetauscher 310a kann aus einer Mehrzahl von Wärmetauschmodulen bestehen, welche beispielsweise zusammengeschweißt werden. Hierbei sind die Schweißnähte vorzugsweise parallel zur Drehachse des Rotors vorgesehen.

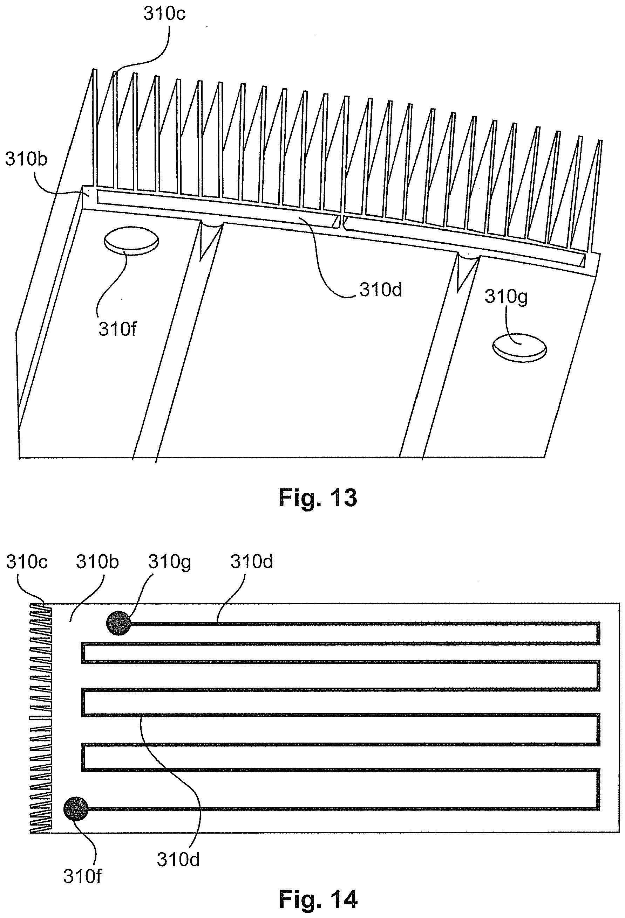

Fig. 13 zeigt eine perspektivische Schnittansicht des Wärmetauschers gemäß dem vierten Ausführungsbeispiel, Der Wärmetauscher weist eine Basiseinheit 310b mit beispielsweise zwei Kanälen 310b auf. Auf der Basiseinheit 310b sind eine Mehrzahl von Kühlrippen 310c vorgesehen. Die Kühlrippen 310c sind im montierten Zustand vorzugsweise parallel zu der Drehachse des Rotors ausgerichtet. Alternativ dazu kann ein Winkel zwischen der Längsachse der Kühlrippen 310c und der Drehachse des Rotors vorhanden sein. Dieser Winkel kann beispielsweise 30° betragen. Auf der Unterseite der Basiseinheit ist ein erstes Loch bzw. Öffnung 310f und ein zweites Loch bzw. Öffnung 310g vorgesehen. Die Kanäle 310d sind dazu ausgestaltet, dass eine Kühlflüssigkeit durch die Kanäle fließen kann, wobei die Kühlflüssigkeit ihre Wärme an die Kühlrippen 310c abgibt und die Kühlflüssigkeit somit abgekühlt wird. Das erste Loch 310f kann beispielsweise dazu dienen, die zu kühlende Kühlflüssigkeit in den Kanal einzuführen. Das zweite Loch 310g kann dazu dienen, das abgekühlte Kühlmittel abfließen zu lassen.

Fig. 14 zeigt eine schematische perspektivische Ansicht der Rückseite des Wärmetauschers, In Fig. 14 ist eine Rückseite des Wärmetauschers 310a gezeigt. Ferner ist das erste und zweite Loch 310f und 310g gezeigt. Gemäß dem Beispiel von Fig. 14 ist ein mäanderförmiger Kanal zwischen dem ersten und zweiten Loch 310f, 310g vorhanden, durch den das Kühlmittel bzw. die Kühlflüssigkeit fließen kann. Durch das erste Loch 310f wird das zu kühlende Kühlmittel bzw. die zu kühlende Kühlflüssigkeit eingeführt und fließt durch den Kanal 310d. Beim Fließen durch den Kanal kann die Kühlflüssigkeit Wärme an den Wärmetauscher abgeben, wobei die Wärme dann durch die Kühlrippen 310c an die Umgebungsluft abgegeben wird. Die abgekühlte Kühlflüssigkeit kann dann durch das zweite Loch 310g wieder abfließen.

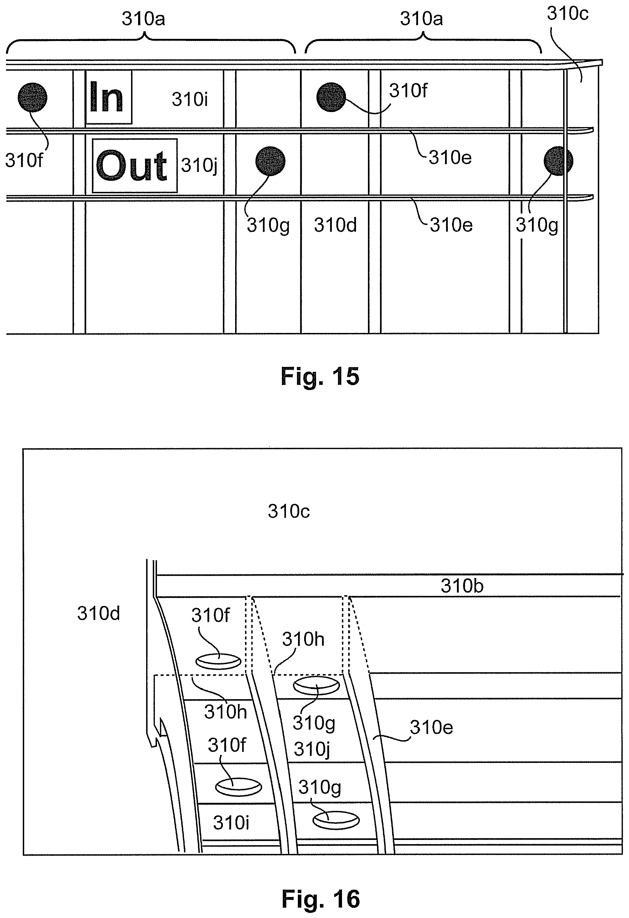

Fig. 15 zeigt eine weitere schematische Ansicht der Rückseite des Wärmetauschers gemäß dem vierten Ausführungsbeispiel. Der Wärmetauscher 310a gemäß dem vierten Ausführungsbeispiel kann aus mehreren Modulen wie beispielsweise in Fig. 13 gezeigt aufgebaut sein. Hierbei werden die Module beispielsweise zusammengeschweißt. Auf der Innenseite des Wärmetauschers können ferner Stützbleche bzw. Stützstege 310e vorgesehen werden. In Fig. 15 sind drei Stützbleche vorgesehen, so dass die Stützbleche zwei Kanäle 310i, 310j ausbilden. Der erste Kanal 310i und der zweite Kanal 310j können dann dazu verwendet werden, um die zu kühlende Kühlflüssigkeit zuzuführen (erster Kanal 310i) und die abgekühlte Kühlflüssigkeit durch den zweiten Kanal 310j abzutransportieren. Hierbei ist der erste Kanal 310i derart ausgestaltet, dass die ersten Löcher 310f in seinem Bereich liegen. Der zweite Kanal 310i ist derart ausgestaltet, dass die Löcher 310g sich in seinem Bereich befinden.

Fig. 16 zeigt eine weitere perspektivische Ansicht der Rückseite des Wärmetauschers gemäß dem vierten Ausführungsbeispiel. Die perspektivische Ansicht gemäß Fig. 14 stellt eine andere Ansicht des in Fig. 15 gezeigten Wärmetauschers dar. Insbesondere sind in Fig. 16 die Stützstege 310i gezeigt, welche den ersten Kanal 310i und den zweiten Kanal 310j jeweils mit den ersten Öffnungen 310f und den zweiten Öffnungen 310g ausbilden. Der erste und zweite Kanal können jeweils durch einen Deckel 310h verschlossen werden, so dass ein geschlossener Kanal ausgebildet werden kann und die zu kühlende Kühlflüssigkeit in den ersten Kanal 310i einfließen und die abgekühlte Kühlflüssigkeit aus dem zweiten Kanal 310j abfließen kann. Die Kühlrippen gemäß der Erfindung können Ausnehmungen (z. B. ausgefräst) aufweisen.

## Patentansprüche

1. Windenergieanlage, mit
einem Synchrongenerator, der einen Generator-Stator und einen Generator-Rotor (200) aufweist, und
einem Flüssigkeits-Kühlsystem (300) zum Kühlen des Generator-Rotors (200), wobei das Flüssigkeits-Kühlsystem (300) mindestens einen Wärmetauscher (310, 310a) aufweist,
**dadurch gekennzeichnet, dass** das Flüssigkeitskühlsystem mindestens einen Kühlkanal (340, 230) in dem Generator-Rotor (200) aufweist, wobei sich das Flüssigkeits-Kühlsystem (300) mit dem Generator-Rotor mit dreht, wobei Kühlflüssigkeit durch den mindestens einen Wärmetauscher (310) und den mindestens einen Kühlkanal (340, 230) in dem Generator-Rotor (200) fließt.

2. Windenergieanlage nach Anspruch 1, wobei
das Flüssigkeits-Kühlsystem (300) eine Filtereinheit (340) zum Filtern der Kühlflüssigkeit, eine Pumpeneinheit (320) zum Pumpen der Kühlflüssigkeit durch den Kühlkreislauf und ein Ausdehnungsgefäß (330) aufweist.

3. Windenergieanlage nach einem der Ansprüche 1 bis 2, wobei
der Generator-Rotor einen Polschuhträger (210) mit einer Mehrzahl von Polschuhen (220) und mindestens einem Kühlkanal (230) aufweist, durch welchen die Kühlflüssigkeit fließen kann.

4. Windenergieanlage nach einem der Ansprüche 1 bis 3, wobei
das Flüssigkeits-Kühlsystem (300) in oder an einem aerodynamischen Rotor (10) der Windenergieanlage vorgesehen ist.

5. Windenergieanlage nach einem der Ansprüche 1 bis 4, wobei
das Kühlsystem (300) ein Ausgleichsgefäß (330) zur Aufnahme von überflüssiger Kühlflüssigkeit aufweist und das Ausgleichsgefäß (330) in oder an dem aerodynamischen Rotor (10) vorgesehen ist.

6. Windenergieanlage nach einem der Ansprüche 1 bis 5, wobei
der mindestens eine Wärmetauscher (310a) in oder an einer Außenhaut eines Rotors (10) der Windenergieanlage vorgesehen ist und insbesondere an die Außenkontur des Rotors angepasst ist.

7. Windenergieanlage nach Anspruch 6, wobei
der Wärmetauscher (310a) eine Basiseinheit (310b) mit mindestens einem Kanal (310d) und eine Mehrzahl von Kühlrippen (310c) aufweist, welche nach außen gerichtet sind.

8. Windenergieanlage nach Anspruch 7, wobei
die Kühlrippen (310c) in Richtung oder in einem Winkel zu der Drehachse des Rotors ausgerichtet sind.

9. Windenergieanlage nach einem der Ansprüche 6 bis 8, wobei der Wärmetauscher aus Wärmetauschermodulen besteht, welche jeweils eine erste und zweite Öffnung (310f, 310g) zum Zuführen und Abführen von Kältemittel in den Kanal (310d) aufweist.

10. Windenergieanlage nach Anspruch 9, wobei der Wärmetauscher an seiner Innenseite Stützbleche bzw. Stützstege (310e) aufweist, welche einen ersten und zweiten Kanal (310i, 310j) ausbilden, wobei der erste und zweite Kanal (310i, 310j) zum Zuführen und Abführen der Kühlflüssigkeit dient.

11. Langsam drehender Synchrongenerator, mit
einem Generator-Stator, einem Generator-Rotor (200) und
einem Flüssigkeits-Kühlsystem (300) zum Kühlen des Generator-Rotors (200),
wobei das Flüssigkeits-Kühlsystem (300) in oder an dem Generator-Rotor (200) vorgesehen ist,
wobei das Flüssigkeits-Kühlsystem (300) mindestens einen Wärmetauscher (310, 310a) aufweist,
**dadurch gekennzeichnet, dass** das Flüssigkeitskühlsystem mindestens einen Kühlkanal (340, 230) in dem Generator-Rotor (200) aufweist, wobei sich das Flüssigkeits-Kühlsystem (300) mit dem Generator-Rotor mit dreht, wobei Kühlflüssigkeit durch den mindestens einen Wärmetauscher (310) und den mindestens einen Kühlkanal (340, 230) in dem Generator-Rotor (200) fließt.

## Claims

1. A wind power installation comprising
a synchronous generator which has a generator stator and a generator rotor (200), and
a fluid cooling system (300) for cooling the generator rotor (200),
wherein the fluid cooling system (300) has at least one heat exchanger (310, 310a),
**characterized in that** the fluid cooling system comprises at least one cooling passage (340, 230) in the generator rotor (200), wherein the fluid cooling system (300) rotates together with the generator rotor (200), wherein cooling fluid flows through the at least one heat exchanger (310) and the at least one cooling passage (340, 230) in the generator rotor (200).

2. A wind power installation according to claim 1 wherein the fluid cooling system (300) has a filter unit (340) for filtering the cooling fluid, a pump unit (320) for pumping the cooling fluid through the cooling circuit and an expansion vessel (330).

3. A wind power installation according to one of claims 1 to 2 wherein the generator rotor has a pole shoe carrier (210) having a plurality of pole shoes (220) and at least one cooling passage (230) through which the cooling fluid can flow.

4. A wind power installation according to one of claims 1 to 3 wherein the fluid cooling system (300) is provided in or at an aerodynamic rotor (10) of the wind power installation.

5. A wind power installation according to one of claims 1 to 4 wherein the cooling system (300) has a compensation vessel (330) for receiving excess cooling fluid and the compensation vessel (330) is provided in or at the aerodynamic rotor (10).

6. A wind power installation according to one of claims 1 to 5 wherein the at least one heat exchanger (310a) is provided in or at an outside skin of a rotor (10) of the wind power installation and is adapted in particular to the outside contour of the rotor.

7. A wind power installation according to claim 6 wherein the heat exchanger (310a) has a base unit (310b) having at least one passage (310d) and a plurality of cooling ribs (310c) which are directed outwardly.

8. A wind power installation according to claim 7 wherein the cooling ribs (310c) are oriented in the direction of or at an angle to the axis of rotation of the rotor.

9. A wind power installation according to one of claims 6 to 8 wherein the heat exchanger comprises heat exchanger modules which each have a first and a second opening (310f, 310g) for the feed and discharge of coolant into the passage (310d).

10. A wind power installation according to claim 9 wherein at its inside the heat exchanger has support plates or support limbs (310e) which provide a first and a second passage (310i, 310j), wherein the first and second passages (310i, 310j) serve for the feed and discharge of the cooling fluid.

11. A slowly rotating synchronous generator comprising
a generator stator, a generator rotor (200) and
a fluid cooling system (300) for cooling the generator rotor (200),
wherein the fluid cooling system (300) is provided in or at the generator rotor (200),
wherein the fluid cooling system (300) has at least one heat exchanger (310, 310a), **characterized in that** the fluid cooling system comprises at least one cooling passage (340, 230) in the generator rotor (200), wherein the fluid cooling system (300) rotates together with the generator rotor (200), wherein cooling fluid flows through the at least one heat exchanger (310) and the at least one cooling passage (340, 230) in the generator rotor (200).

## Revendications

1. Eolienne, avec
un générateur synchrone, qui présente un stator de générateur et un rotor de générateur (200), et
un système de refroidissement (300) à liquide servant à refroidir le rotor de générateur (200), dans laquelle le système de refroidissement (300) à liquide présente au moins un échangeur de chaleur (310, 310a),
**caractérisée en ce que** le système de refroidissement à liquide présente au moins un canal de refroidissement (340, 230) dans le rotor de générateur (200), dans laquelle le système de refroidissement (300) à liquide est entraîné en rotation avec le rotor de générateur, dans laquelle du liquide de refroidissement s'écoule à travers l'au moins un échangeur de chaleur (310) et l'au moins un canal de refroidissement (340, 230) dans le rotor de générateur (200).

2. Eolienne selon la revendication 1, dans laquelle
le système de refroidissement (300) à liquide présente une unité de filtrage (340) servant à filtrer le liquide de refroidissement, une unité de pompage (320) servant à pomper le liquide de refroidissement à travers le circuit de refroidissement et un récipient d'expansion (330).

3. Eolienne selon l'une quelconque des revendications 1 et 2, dans laquelle
le rotor de générateur présente un support de pièces polaires (210) avec une multitude de pièces polaires (220) et au moins un canal de refroidissement (230), à travers lequel le liquide de refroidissement peut s'écouler.

4. Eolienne selon l'une quelconque des revendications 1 à 3, dans laquelle
le système de refroidissement (300) à liquide est prévu dans ou au niveau d'un rotor (10) aérodynamique de l'éolienne.

5. Eolienne selon l'une quelconque des revendications 1 à 4, dans laquelle
le système de refroidissement (300) présente un récipient de compensation (330) servant à recevoir un excédent de liquide de refroidissement et le récipient de compensation (330) est prévu dans ou au niveau du rotor (10) aérodynamique.

6. Eolienne selon l'une quelconque des revendications 1 à 5, dans laquelle
l'au moins un échangeur de chaleur (310a) est prévu dans ou au niveau d'une enveloppe extérieure d'un rotor (10) de l'éolienne et en particulier est adapté au contour extérieur du rotor.

7. Eolienne selon la revendication 6, dans laquelle
l'échangeur de chaleur (310a) présente une unité de base (310b) avec au moins un canal (310d) et une multitude de nervures de refroidissement (310c), lesquelles sont dirigées vers l'extérieur.

8. Eolienne selon la revendication 7, dans laquelle
les nervures de refroidissement (310c) sont orientées en direction de ou selon un angle par rapport à l'axe de rotation du rotor.

9. Eolienne selon l'une quelconque des revendications 6 à 8, dans laquelle l'échangeur de chaleur est constitué de modules échangeurs de chaleur, lesquels présentent respectivement une première et une deuxième ouverture (310f, 310g) servant à amener et à évacuer du liquide réfrigérant dans le canal (310d).

10. Eolienne selon la revendication 9, dans laquelle l'échangeur de chaleur présente au niveau de son côté intérieur des tôles d'appui ou des entretoises d'appui (310e), lesquelles réalisent un premier et un deuxième canal (310i, 310j), dans laquelle le premier et le deuxième canal (310i, 310j) servent à amener et à évacuer le liquide de refroidissement.

11. Générateur synchrone à rotation lente, avec
un stator de générateur, un rotor de générateur (200) et
un système de refroidissement (300) à liquide servant à refroidir le rotor de générateur (200),
dans lequel le système de refroidissement (300) à liquide est prévu dans ou au niveau du rotor de générateur (200),
dans lequel le système de refroidissement (300) à liquide présente au moins un échangeur de chaleur (310, 310a),
**caractérisé en ce que** le système de refroidissement à liquide présente au moins un canal de refroidissement (340, 230) dans le rotor de générateur (200), dans lequel le système de refroidissement (300) à liquide est entraîné en rotation avec le rotor de générateur, dans lequel du liquide de refroidissement s'écoule à travers l'au moins un échangeur de chaleur (310) et l'au moins un canal de refroidissement (340, 230) dans le rotor de générateur (200).
